# EUROPEAN PATENT APPLICATION

(11) **EP 3 480 091 A1**
(43) Date of publication of application: **08.05.2019**
(21) Application number: 18204857.9
(22) Date of filing: 07.11.2018
(51) Int. Cl.: B62J 11/00, B62H 5/20

(54) **HELMET THEFT PREVENTING SYSTEM IN SHARED-USE MOTORCYCLES**

(30) Priority: 07.11.2017 ES 201700754
(71) Applicant: Sharing Muving, S.L., 11500 El Puerto de Santa Maria-Cadiz (ES)
(72) Inventor: MARTINEZ MOYA, Miguel Ángel, 28110 ALGETE-MADRID (ES); DURAN NAVARRO, Jorge, 28045 MADRID (ES); JIMENEZ BONILLA, Franciso José, 28050 MADRID (ES)
(74) Representative: Padial Martinez, Ana Belen

(57) **Abstract**

Motorcycle helmet (1) theft preventing system for a shared-use motorcycle, the helmets being storable in a trunk mounted on the motorcycle, comprising a closing control circuit (5) connected to the closing device (3) to detect the open or closed state of the closing device (3), and, for each helmet (1) storable in the trunk, an electrical connector cable (7) interconnected by a first end in the closing control circuit (5) and provided at a second end with a male connector (8), and a female connector (9) provided for connection thereof to the helmet (1), wherein the closing control circuit (5) closes electrically when the male connector (9) is inserted into the female connector (9) and when the closing device (3) is closed, establishing an electrical connection with the electronic control system (6) via the closing control circuit (5), so that the electronic control system (6) emits the signal of end of journey.

## Description

Helmet theft preventing system in shared-use motorcycles.

### BACKGROUND OF THE INVENTION

The present invention belongs to the technical field of anti-theft devices in shared-use vehicles, particularly of devices to prevent the non-return of helmets that are lent together with shared-use motorcycles.

### BACKGROUND OF THE INVENTION

Electric vehicles, such as electric motorcycles and electric cars in fleets of conventional vehicles, tend to be connected by software technologies and loT ("Internet of Things") platforms, especially in fleets of electric vehicles in which respective control units are installed. These technologies allow users to connect to a management platform through a mobile application ("app") installed on their smart phones so that a user can search for nearby vehicles and choose a vehicle they wish to rent and, once identified through the mobile application using their credentials with which they are registered on the platform, the platform communicates with the vehicle and authorises the identified user to use the vehicle. In addition, these technologies make it possible, based on the control unit located in the vehicle, to monitor the location of the rented electric vehicle, record the time of use of the vehicle and bill the time of its use, detect vehicle condition and that of its components, etc.

In particular, it is common in the shared-use motorcycle industry, such as motorcycle rental, that along with the motorcycle at least one helmet is also made available to the user. This or these helmets tend to be stored in the trunks of the respective motorcycles.

To prevent a user, when returning the motorcycle after use, from failing to simultaneously return, either inadvertently or intentionally, the helmet or helmets lent to them, various systems have been devised to prevent such non-return of helmets by users, which include the motorcycle trunk lock control.

Thus, systems are known based on volumetric detector sensors, intended to detect the presence of the helmets inside the motorcycle trunk, which, however, have the disadvantage that they can be "fooled" by the presence in the trunk of any object with a similar volume to that of a helmet.

NFC ("Near Field Communication") systems are also known in helmets provided with NFC tags that require the helmets to be positioned very close to a sensor located inside the trunk, which have a relatively high margin of error and are further relatively expensive to implement.

On the other hand, when NFID ("Radio Frequency Identification") technology is used to detect emitters provided on the helmets, there are high costs and they can also be "fooled" when the helmet is merely placed near the trunk and the trunk is closed without storing the helmet inside.

Chinese utility model application CN201085098Y describes a smart anti-theft helmet for two-wheeled vehicles, which includes an anti-theft device formed by a left housing, a right housing and a remote control to open or cut a vehicle starter system; wherein the remote control comprises a lock switch and a release switch in addition to an alarm if the system is forced. Japanese patent application JP H07165143 A describes a vehicle anti-theft system in which a password needs to be entered before allowing start-up, the interface for entering same being in the compartment where the helmet is stored. Both systems are complex in their implementation and in their use by the user.

The term "motorcycle" used in this specification encompasses vehicles such as two or three-wheeled motorcycles and mopeds, scooters and quads.

### DESCRIPTION OF THE INVENTION

The object of the present invention is to solve the problems of the prior art by using a motorcycle helmet theft preventing system for a shared-use motorcycle that comprises a closing device for a lid of a trunk mounted on the motorcycle, a closing control circuit connected to the closing device to detect the open or closed state of the closing device, an electronic control system of end of service connected to the closing control circuit and that generates a signal of end of service when it detects that the closing control circuit is electrically closed, and a helmet detection system to detect the presence of at least one motorcycle helmet in the trunk of the motorcycle,

For each helmet storable in the trunk, the system comprises an electrical connector cable interconnected by a first end in the closing control circuit. The connector cable is provided at its second end with a male connector. The system further comprises a female connector provided for its connection to the helmet.

The closing control circuit closes electrically when the male connector is inserted into the female connector and when the closing device is closed, establishing an electrical connection with the electronic control system through the closing control circuit, so that the electronic control system emits the signal of end of journey.

In one embodiment of the invention, the system comprises two connector cables connected in series by their respective first ends to the closing control circuit and provided at their respective second ends with respective male connectors and two female connectors. Each female connector provided for connecting to one of the a helmets. In turn, the closing control circuit is electrically closed when the male connectors are inserted into the female connectors and when the closing device is closed, establishing an electrical connection with the electronic control system through the closing control circuit, so that the electronic control system emits the signal of end of journey.

As can be seen, in accordance with the present invention, only when the male connector or, where appropriate, both male connectors are connected to their corresponding female connector, can the electrical closing of the closing control circuit occur through the connectors of the corresponding connector cable in order to establish electrical connection with the electronic control system through the closing control circuit, so that the electronic control system can emit the signal of end of journey. If a helmet is not connected and stored in the trunk and if the trunk is not closed, it is not possible to end the motorcycle rental service and, therefore, the user who has not returned the helmet(s) will continue paying the rental service.

As can be seen, the present invention takes advantage of the already existing signal that detects that the motorcycle trunk is open or closed for the end of the service to further allow the detection of the helmets based on a simple wiring connected to the electronics already existing on the motorcycle. It is very reliable and has a low cost of implementation, can be made with materials resistant to different environmental conditions.

### BRIEF DESCRIPTION OF THE DRAWINGS

In order to complement the description being made and for the sake of a better understanding of the characteristics of the invention, incorporated as an integral part of said description is a set of schematic drawings that are illustrative and not limiting in nature and represent the following:
Figure 1.- Shows a side view of a motorcycle with a trunk to which the system of the invention is applicable.
Figure 2.- Shows a rear view of the trunk of the motorcycle shown in figure 1 in which two helmets have been stored.
Figure 3.- Shows a rear perspective view of the trunk shown in figure 3.
Figure 4.- Shows a side view of a male connector according to the invention.
Figure 5.- Shows a side view of a female connector according to the invention provided in a helmet.
Figure 6.- Shows a side view of the female connector shown in figure 5.
Figure 7.- Shows a side view of the male connector of figure 5 inserted into the female connector shown in figure 7.
Figure 8.- Shows an embodiment of the system according to the invention

These figures comprise signs of reference identifying the following elements:
- 1: helmet
- 2: motorcycle
- 3: closing device
- 3a: lock body
- 3b: latch
- 4: trunk
- 4a: trunk lid
- 4b: trunk box
- 4c: trunk interior
- 5: closing control circuit
- 6: electronic control system
- 7: connector cable
- 8: male connector
- 8a: contact end
- 8b: contact body
- 8c: plastic body
- 9: female connector
- 9a: fastening tab
- 9b: inlet mouth
- 9c: tubular body
- 9d: support body
- 10: screw
- 11: nut

### EMBODIMENT OF THE INVENTION

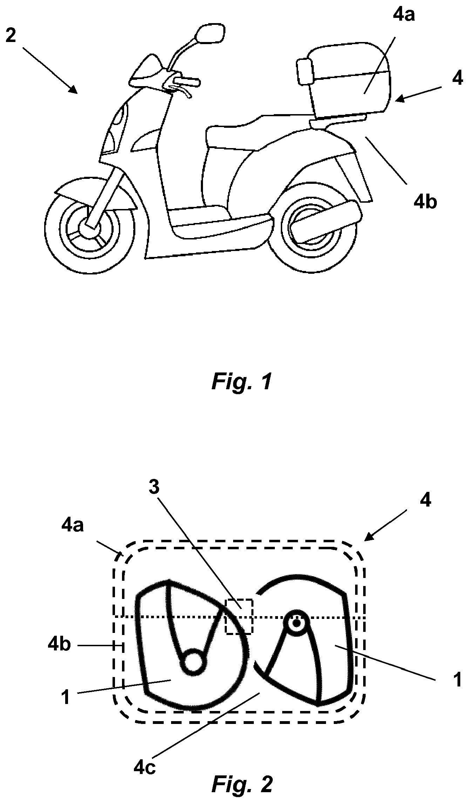

Figure 1 shows a motorcycle 2 on whose rear part a trunk 4 is mounted, which comprises a box 4b and a lid 4a.

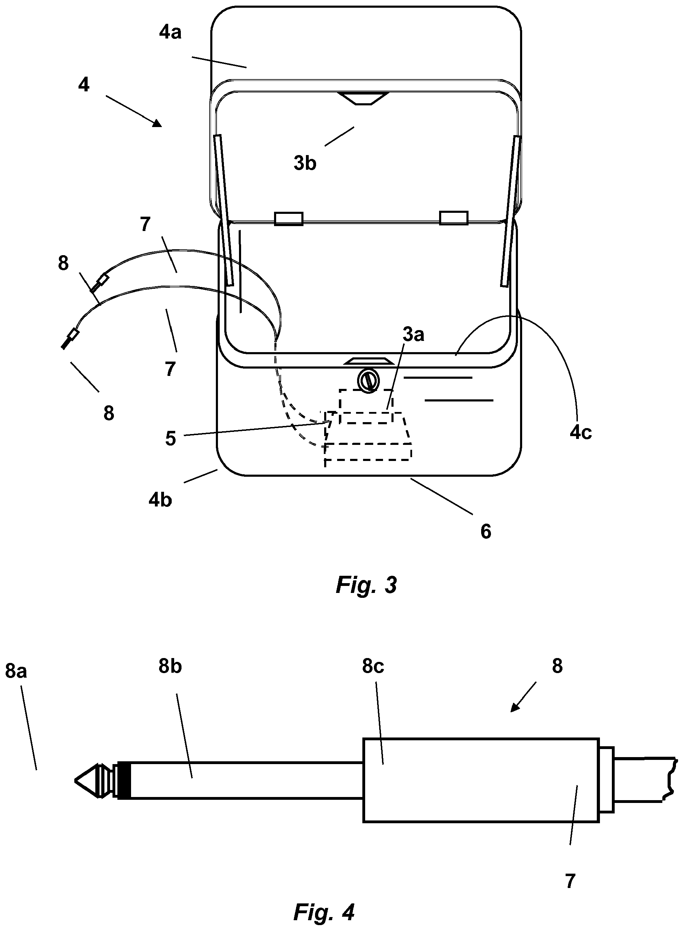

The trunk which is illustrated in more detail in figures 2 and 3, is dimensioned to store two helmets 1 in its interior 4c. The lid 4a closes on the box 4b of the trunk 4 by means of a closing device 3 comprising a lock body 3a mounted on the rear wall of the box 4b of the trunk 4 and a latch 3b mounted on the rear wall of the lid 4a of the trunk 4.

The lock body 3a is electrically connected to an electronic control system 6 of end of service provided at the bottom of the box 4b of the trunk 4 through cables forming an electric closing control circuit 5.

The closing control circuit 5 is also connected to two two-wire conductor electrical connector cables 7 that have respective male connectors 8 at their free ends.

The male connector 8 (see figure 4) is an audio-type connector, known in itself, and comprises a metal contact end 8a and a metal contact body 8b electrically insulated relative to each other, and a plastic body 8c. The contact end 8a and the contact body 8b are respectively connected to the conductor wires of the cable 7.

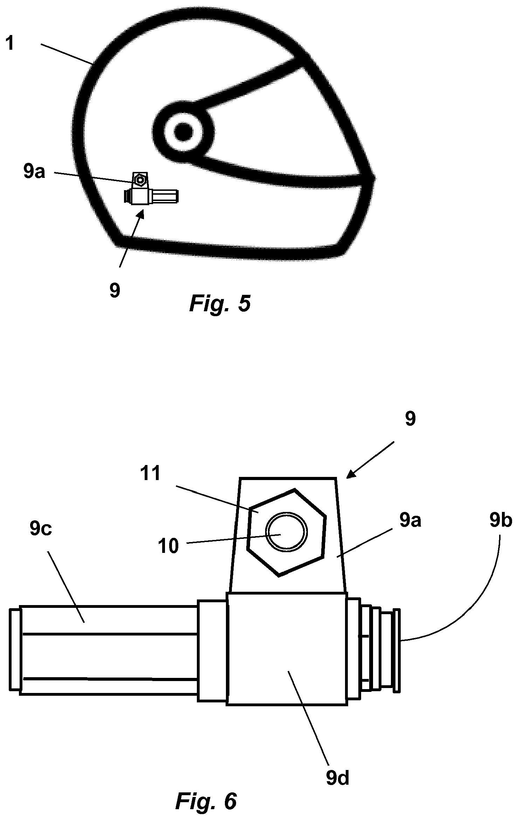

Figures 5 and 6 show an embodiment of a female body 7, and its fastening to a helmet 1. As can be seen, the female body 9 comprises a fastening tab 9a of a support body 9d which holds a tubular body 9c with an inlet mouth 9b. The female body 9 is fixed to the helmet 1 by means of a screw 10, which passes through a lateral part of the helmet 1 and the fastening tab 9a and a nut 11.

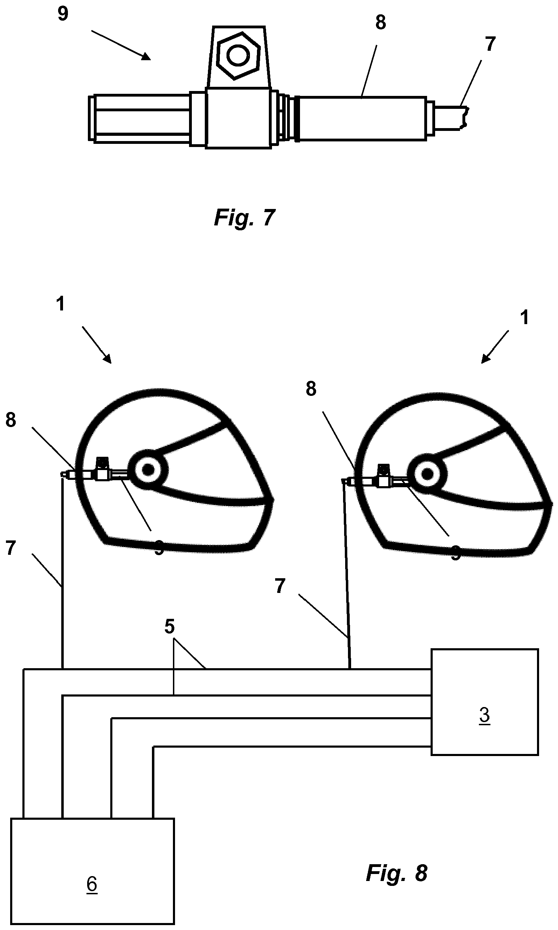

Figure 7 shows the connector 8 inserted into the female connector 9, so that the contact end 8a and the contact body 8b are electrically connected through an inner metallic sleeve (not shown in the figures).

Figure 8 illustrates the connections between the closing device 3 and the electronic control system 6 of end of service through the closing control circuit 5.

In this embodiment, the system comprises two connector cables 7 connected in series by their respective first ends to the closing control circuit 5 and provided at their respective second ends with respective male connectors 8, and two female connectors 9, each female connector 9 being connected to the side of one of the helmets 1.

The closing control circuit 5 comprises two cables connected to the electronic control system 6 of end of service. The cables of the closing control circuit 5 are connected, on the one hand, to the closing device 3 to detect the open or closed state of the closing device 3. Thus, when the closing device 3 closes the trunk 4, namely, when the latch 3b is inserted in the lock body 3a, the electrical connection is established between the two cables of the closing control circuit 5. On the other hand, the connector cables 7 are interconnected in series in one of the cables of the closing control circuit 5 such that, only when both of the male connectors 8 are connected to their corresponding female connector 9, can the electrical closing of the closing control circuit 5 occur through the connectors 8, 9 of the corresponding connector cable 7 to establish the electrical connection with the electronic control system 6 via the closing control circuit 5, so that the electronic control system 6 can emit the signal of end of journey. If the two helmets 1 are not connected and stored in the trunk 4, and if the trunk 4 is not closed, it is not possible to end the motorcycle rental service and, therefore, the user who has not returned the helmet(s) will continue paying the rental service.

## Claims

1. Motorcycle helmet (1) theft preventing system for a shared-use motorcycle (2) that comprises
a closing device (3) for a lid (4a) of a trunk (4) mounted on the motorcycle (2),
a closing control circuit (5) connected to the closing device (3) to detect the open or closed state of the closing device (3);
an electronic control system (6) of end of service connected to the closing control circuit (5) and that generates a signal of end of service when it detects that the closing control circuit (5) is electrically closed,
a helmet detection system to detect the presence of at least one motorcycle helmet (1) in the trunk (4) of the motorcycle (2),
**characterised in that**
it comprises, for each helmet (1) storable in the trunk (4),
an electrical connector cable (7) interconnected by a first end in the closing control circuit (5) and provided at a second end with a male connector (8), and
a female connector (9) provided for connection thereof to the helmet (1);
the closing control circuit (5) closes electrically when the male connector (9) is inserted into the female connector (9) and when the closing device (3) is closed, establishing an electrical connection with the electronic control system (6) via the closing control circuit (5), so that the electronic control system (6) emits the signal of end of journey.

2. Theft preventing system, according to claim 1, **characterised in that**
it comprises two connector cables (7) connected in series by their respective first ends to the closing control circuit (5) and provided at their respective second ends with respective male connectors (8), and two female connectors (9), each female connector (9) being provided for connecting to one of the helmets (1);
the closing control circuit (5) closes electrically when the male connectors (8) are inserted into the female connectors (9) and when the closing device (3) is closed, establishing an electrical connection with the electronic control system (6) via the closing control circuit (5), so that the electronic control system (6) emits the signal of end of journey.
